(19) **Europäisches Patentamt / European Patent Office / Office européen des brevets**

(11) **EP 4 112 796 A1**

(12) # EUROPEAN PATENT APPLICATION
published in accordance with Art. 153(4) EPC

(43) Date of publication:
**04.01.2023 Bulletin 2023/01**

(21) Application number: **21781624.8**

(22) Date of filing: **26.03.2021**

(51) International Patent Classification (IPC):
**D04H 3/16** (2006.01)   **B32B 5/02** (2006.01)
**B32B 5/26** (2006.01)

(52) Cooperative Patent Classification (CPC):
**B32B 5/02; B32B 5/26; D04H 3/16**

(86) International application number:
**PCT/JP2021/012946**

(87) International publication number:
**WO 2021/200682 (07.10.2021 Gazette 2021/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2020 JP 2020065275**

(71) Applicant: **Mitsui Chemicals, Inc.
Tokyo 105-7122 (JP)**

(72) Inventors:
- IIHAMA, Sho
  **Chiba 299-0265 (JP)**
- SHIMADA, Koichi
  **Chiba 299-0265 (JP)**

(74) Representative: **Hoffmann Eitle
Patent- und Rechtsanwälte PartmbB
Arabellastraße 30
81925 München (DE)**

(54) **NONWOVEN FABRIC LAMINATE, COVER SHEET, AND ABSORBENT ARTICLE**

(57)    A nonwoven fabric layered body includes, in the following order, a crimped surface layer including a crimped spunbond nonwoven fabric including a crimped fiber, a crimped intermediate layer including a crimped spunbond nonwoven fabric including a crimped fiber, and a non-crimped surface layer including a non-crimped spunbond nonwoven fabric including a non-crimped fiber, a linear mass density of the crimped fiber in the crimped surface layer is from 1.4 denier to 1.6 denier, and a linear mass density of the crimped fiber in the crimped intermediate layer is less than 1.4 denier.

**Description**

Technical Field

The present invention relates to a nonwoven fabric layered body, a cover sheet and an absorbent article.

Since spunbond nonwoven fabrics are excellent in air permeability, flexibility, and the like, they are used as absorbent articles such as paper diapers and sanitary napkins, but further improvement in properties is required. For example, from the viewpoint of improving properties such as bulkiness, use of a crimped spunbond nonwoven fabric including a crimped fiber, and a nonwoven fabric layered body in which a plurality of crimped spunbond nonwoven fabric layers are stacked are being studied.

A spunbond nonwoven fabric layered body having a plurality of spunbond nonwoven fabric layers is proposed, in which at least two and up to four spunbond nonwoven fabric layers include or consist of crimped endless filaments, the crimping degree of the filaments in these spunbond nonwoven fabrics is different, the crimped filaments of the spunbond nonwoven fabric layers each have a crimp number of at least 2 loops per 1 cm of their length, and the crimped filaments of the spunbond nonwoven fabric layers are configured as bicomponent filaments using the first plastic component and the second plastic component, and each of the plastic components is present in each of the filaments in a proportion of at least 10% by weight (for example, see Patent Document 1).

Further, In Patent Document 1, The spunbond nonwoven fabric layered body is proposed, in which the crimping degree of the spunbond nonwoven fabric layers placed on top of each other increases from the bottom to the top.

A spunbond nonwoven fabric including crimped multicomponent fibers is proposed, in which the first component of the multicomponent fibers consist of the thermoplastic first polymer material including a thermoplastic first base polymer and the second component of the multicomponent fibers consist of the thermoplastic second polymer material including a thermoplastic second base polymer different from the first base polymer, at least one of the first polymer material or the second polymer material is a polymer blend further including, in addition to each base polymer, a high melt flow rate polymer of 1 % to 10 % by weight, a melt flow rate of the high melt flow rate polymer is from 600 g/10 min to 3000 g/10 min under the conditions of 230°C and 2.16 kg, the multicomponent fibers have a linear mass density of less than 1.5 denier, and the average number of crimps of the multicomponent fibers is in the range of at least 5 per 1 cm of fiber (for example, see Patent Document 2).

Citation List

Patent Document

[Patent Document 1] Japanese Patent Application Laid-Open (JP-A) No. 2019-131945 [Patent Document 2] JP-A No. 2019-131946

SUMMARY OF INVENTION

It is difficult to provide a spunbond nonwoven fabric layered body with good bulkiness, flexibility and uniformity. The spunbond nonwoven fabric layered body described in Patent Document 1 is excellent in bulkiness, but there is room for improvement in terms of uniformity. Further, the spunbond nonwoven fabric described in Patent Document 2 has improved uniformity and flexibility, but there is room for improvement in terms of bulkiness, and there is room for further improvement in terms of uniformity.

The invention is made in view of the above, and the object is to provide a nonwoven fabric layered body excellent in bulkiness, flexibility and uniformity and a cover sheet and an absorbent article that include the nonwoven fabric layered body.

Solution to Problem

Means for solving the above problems include the following aspect.

<1> A nonwoven fabric layered body including, in the following order:

a crimped surface layer including a crimped spunbond nonwoven fabric including a crimped fiber,
a crimped intermediate layer including a crimped spunbond nonwoven fabric including a crimped fiber, and
a non-crimped surface layer including a non-crimped spunbond nonwoven fabric including a non-crimped fiber,
in which a linear mass density of the crimped fiber in the crimped surface layer is from 1.4 denier to 1.6 denier, and
a linear mass density of the crimped fiber in the crimped intermediate layer is less than 1.4 denier.

<2> The nonwoven fabric layered body according to <1>, in which the linear mass density of the crimped fiber in the crimped surface layer is from 1.5 denier to 1.6 denier.

<3> The nonwoven fabric layered body according to <1> or <2>, in which the linear mass density of the crimped fiber in the crimped intermediate layer is from 0.7 denier to 1.3 denier.

<4> The nonwoven fabric layered body according to any one of <1> to <3>, in which a linear mass density of the non-crimped fiber in the non-crimped surface layer is 1.3 denier or less.

<5> The nonwoven fabric layered body according to any one of <1> to <4>, in which each of the crimped fiber in the crimped surface layer and the crimped fiber in the crimped intermediate layer includes a propylene-based polymer.

<6> The nonwoven fabric layered body according to any one of <1> to <5>, in which each melt flow rate (MFR) (ASTM D-1238, 230°C, and load: 2,160 g) of a thermoplastic resin included in the crimped fiber in the crimped surface layer and a thermoplastic resin included in the crimped fiber in the crimped intermediate layer is independently 100 g/10 min or less.

<7> The nonwoven fabric layered body according to any one of <1> to <6>, in which a total basis weight of the nonwoven fabric layered body is from 15 g/m$^2$ to 20 g/m$^2$.

<8> The nonwoven fabric layered body according to any one of <1> to <7>, in which a total value of a basis weight of the crimped surface layer and the crimped intermediate layer is 50 % or more with respect to a total basis weight of the nonwoven fabric layered body.

<9> The nonwoven fabric layered body according to any one of <1> to <8>, in which in each layer of the nonwoven fabric layered body, a ratio (maximum basis weight/minimum basis weight) of a basis weight (maximum basis weight) in a layer with a maximum basis weight and a basis weight (minimum basis weight) in a layer with a minimum basis weight is from 1.0 to 1.3.

<10> A nonwoven fabric layered body including:

a crimped layer including a crimped spunbond nonwoven fabric including a crimped fiber, and

a non-crimped surface layer including a non-crimped spunbond nonwoven fabric including a non-crimped fiber, in which the nonwoven fabric layered body satisfies the following (1) to (3):

(1) a difference (TO - TM) between a thickness TO at pressure of 0.5 gf/cm$^2$ in a compression characteristics test measured by a KES method and a thickness TM at pressure of 50 gf/cm$^2$ measured by the KES method is more than 0.30 mm;

(2) a value of a cantilever in an MD direction in accordance with a cantilever method (ISO method) of JIS L 1913: 2010 is less than 40 mm; and

(3) a formation index (V) represented by the following Formula (a) is less than 310:

$$\text{Formula (a): } V = 10\sigma/E$$

in which, in Formula (a), V represents the formation index, $\sigma$ represents a standard deviation of a shading unevenness of the nonwoven fabric layered body, E represents 2-logT, and T represents a light transmittance (%) of the nonwoven fabric layered body.

<11> A cover sheet including the nonwoven fabric layered body according to any one of <1> to <10>.

<12> An absorbent article including the nonwoven fabric layered body according to any one of <1> to <10> and the cover sheet according to <11>.

Advantageous Effects of Invention

According to the present disclosure, a nonwoven fabric layered body excellent in bulkiness, flexibility and uniformity and a cover sheet and an absorbent article that include the nonwoven fabric layered body can be provided.

DESCRIPTION OF EMBODIMENTS

In the present disclosure, numerical ranges indicated using "to" mean a range including the numerical values described before and after "to" as the lower limit value and the upper limit value, respectively.

In a set of numerical ranges that are stated stepwise in the present disclosure, the upper limit value or the lower limit value of a numerical range may be replaced with an upper limit value or a lower limit value of other numerical range. Further, in a numerical range stated in the present disclosure, the upper limit or the lower limit of the numerical range may be replaced with a relevant value indicated in any of Examples.

In the present disclosure, the "step" refers not only to a step that is independent from the other steps, but also to a step that cannot be clearly distinguished from the other steps, as long as the aim of the step is achieved.

In the present disclosure, when referring to the amount of each component in the composition, in a case in which there are plural substances corresponding to each component in the composition, it refers to the total amount of the plural substances in the composition, unless otherwise specified.

[Nonwoven Fabric Layered Body]

<First Embodiment>

A nonwoven fabric layered body according to a first embodiment of the present disclosure includes, in the following order: a crimped surface layer including a crimped spunbond nonwoven fabric including a crimped fiber, a crimped intermediate layer including a crimped spunbond nonwoven fabric including a crimped fiber, and a non-crimped surface layer including a non-crimped spunbond nonwoven fabric including a non-crimped fiber, in which a linear mass density of the crimped fiber in the crimped surface layer is from 1.4 denier to 1.6 denier, and a linear mass density of the crimped fiber in the crimped intermediate layer is less than 1.4 denier.

The nonwoven fabric layered body of the present embodiment is excellent in bulkiness, flexibility and uniformity. The reason is presumed as follows. The nonwoven fabric layered body of the present embodiment includes the crimped surface layer in which the linear mass density of the crimped fiber is from 1.4 denier to 1.6 denier, and the crimped intermediate layer in which the linear mass density of the crimped fiber is less than 1.4 denier, and thereby the nonwoven fabric layered body is excellent in bulkiness, flexibility and uniformity. Especially, the nonwoven fabric layered body of the present embodiment is provided with the crimped intermediate layer, and thereby the nonwoven fabric layered body is superior in the bulkiness to a nonwoven fabric layer with a non-crimped intermediate layer and without a crimped intermediate layer. Further, in the crimped intermediate layer, due to the configuration that the linear mass density of the crimped fiber is less than 1.4 denier, the crimped fiber can be made thin, and the amount of the fiber in the crimped intermediate layer can be increased at the same basis weight. Thereby, the configuration contributes to the uniformity of the nonwoven fabric layered body. The nonwoven fabric layered body of the present embodiment includes the crimped surface layer in which the linear mass density of the crimped fiber is from 1.4 denier to 1.6 denier, and thereby the bulkiness can be improved as compared with the case where a nonwoven fabric layered body includes a crimped surface layer in which the linear mass density of the crimped fiber is less than 1,4 denier, and the uniformity can be improved as compared with the case in which a nonwoven fabric layered body includes a crimped surface layer in which the linear mass density of the crimped fiber is more than 1.6 denier.

Further, the nonwoven fabric layered body of the present embodiment is excellent in fuzz resistance. The reason is presumed that the nonwoven fabric layered body of the present embodiment includes the non-crimped surface layer including the non-crimped spunbond nonwoven fabric, and the non-crimped surface layer is less fuzzy than a crimped surface layer.

Hereinafter, the configurations of the crimped surface layer, the crimped intermediate layer and the non-crimped surface layer included in the nonwoven fabric layered body of the present embodiment will be explained.

(Crimped Surface Layer)

The nonwoven fabric layered body of the present embodiment includes a crimped surface layer including a crimped spunbond nonwoven fabric including a crimped fiber, and the linear mass density of the crimped fiber in the crimped surface layer is from 1.4 denier to 1.6 denier.

The crimped surface layer may have one layer or may have two or more layers. When the crimped surface layer has two or more layers, in each of the two or more layers, the linear mass density of the crimped fiber only has to satisfy from 1.4 denier to 1.6 denier.

The linear mass density of the crimped fiber in the crimped surface layer is preferably from 1.5 denier to 1.6 denier, from the view point of the bulkiness and uniformity of the nonwoven fabric layered body.

The crimped fiber in the crimped surface layer preferably includes a thermoplastic resin. The thermoplastic resin is not particularly limited as long as it is possible to produce a crimped spunbond nonwoven fabric including a crimped fiber, and examples thereof include olefin-based polymers, polyester-based polymers, polyamide-based polymers, thermoplastic resin compositions including a plurality of these polymers, and the like. In the present disclosure, the thermoplastic resin is a concept including the thermoplastic resin composition.

The melt flow rate (MFR) (ASTM D-1238, 230°C, a load of 2160 g) of the thermoplastic resin is preferably 100 g/10 min or less, more preferably from 20 g/10 min to 100 g/10 min, and still more preferably from 30 g/10 min to 80 g/10 min. When the MFR of the thermoplastic resin is 100 g/10 min or less, the crimped fiber tends to have excellent mechanical strength. When the MFR of the thermoplastic resin is 20 g/10 min or more, fiber breakage during draw spinning tends to be reduced.

The olefin-based polymers is a polymer mainly including a structural unit derived from an olefin, the polyester-based polymer is a polymer including a polyester as a structural unit, and the polyamide-based polymer is a polymer including a polyamide as a structural unit.

In the present disclosure, "mainly including" means that the target substance is included in the largest amount in the total. For example, it means that as a ratio with respect to the total, the content ratio of the target substance is 50 % by mass or more.

The thermoplastic resin preferably includes the olefin-based polymer. Examples of the olefin-based polymers include homopolymers or copolymers of $\alpha$-olefin(s) such as ethylene, propylene, 1-butene, 1-pentene, 1-hexene, 1-octene, 3-methyl-1-butene, 3-methyl-1-pentene, 3-ethyl-1-pentene , 4-methyl-1-pentene, 4-methyl-1-hexene, or the like.

More specifically, examples of the $\alpha$-olefin homopolymers or copolymers include ethylene-based polymers such as a high-pressure low-density polyethylene, a linear low-density polyethylene (LLDPE), a high-density polyethylene, and an ethylene/$\alpha$-olefin copolymer including a structural unit derived from ethylene as a main parts, propylene-based polymers such as polypropylene (propylene homopolymer), and a propylene/a-olefin copolymer including a structural unit derived from propylene as a main parts, 1-butene-based polymers such as a 1-butene homopolymer, and a 1-butene/$\alpha$-olefin copolymer including a structural unit derived from 1-butene as a main parts, 4-methyl-1-pentene-based polymers such as a 4-methyl-1-pentene homopolymer, and a 4-methyl-1-pentene/$\alpha$-olefin copolymer including a structural unit derived from 4-methyl-1-pentene as a main parts. Among them, from the viewpoint of being excellent in spinnability, mechanical strength, chemical resistance and the like, the $\alpha$-olefin homopolymer or copolymer is preferably the propylene-based polymer.

The propylene-based polymer may be either a propylene homopolymer or a propylene/$\alpha$-olefin copolymer, or may include both. The $\alpha$-olefin used for the copolymerization of the propylene/a-olefin copolymer is preferably an $\alpha$-olefin having 2 or more carbon atoms (excluding propylene), more preferably an $\alpha$-olefin having 2 or 4 to 8 carbon atoms. Specifically, the $\alpha$-olefin is preferably ethylene, 1-butene, 1-pentene, 1-hexene, 1-octene, 3-methyl-1-butene, 3-methyl-1-pentene, 3-ethyl-1-pentene, 4-methyl-1-pentene, 4-methyl-1-hexene or the like.

More specifically, examples of the propylene/a-olefin copolymer include a propylene/ethylene copolymer, and a propylene/ethylene/1-butene copolymer.

In the propylene/a-olefin copolymer, the content ratio of the structural unit derived from the $\alpha$-olefin is preferably from 1 mol% to 10 mol% of the total and more preferably from 1 mol% to 5 mol% of the total.

The melting point (Tm) of the propylene-based polymer is preferably 120°C or more, and more preferably from 125°C to 165°C.

In the present disclosure, the melting point is measured as follows.

(1) The propylene-based polymer is placed in a measurement pan of a differential scanning calorimeter (DSC) manufactured by PerkinElmer, the temperature is raised from 30°C to 200°C at a rate of 10°C/min, held at 200°C for 10 minutes, and then, lowered to 30°C at a rate of 10°C/min.
(2) Next, the temperature is again raised from 30°C to 200°C at a rate of 10° C/min, and the melting point is determined from the peak observed during that time.

The melting point (Tm) of the propylene homopolymer is preferably 155°C or more, and more preferably from 157°C to 165°C.

The melting point (Tm) of the propylene/a-olefin copolymer is preferably from 120°C to 155 °C, and more preferably from 125°C to 150°C.

The melt flow rate (MFR) (ASTM D1238, 230°C, and load: 2,160 g) of the propylene-based polymer is preferably from 20 g/10 min to 100 g/10 min, and more preferably from 30 g/10 min to 80 g/10 min. When the MFR of the propylene-based polymer is 100 g/10 min or less, there is a tendency that the crimped fiber has excellent mechanical strength. When the MFR of the propylene-based polymer is 20 g/10 min or more, there is a tendency that fiber breakage during draw spinning can be reduced.

The crimped fiber in the crimped surface layer may be a fiber including one kind of a thermoplastic resin, or may be composite fiber including two or more kinds of thermoplastic resins. The composite fiber may be, for example, a side-by-side type, a concentric core sheath type or an eccentric core sheath type. The eccentric core sheath type composite fiber may be an exposed type in which the core portion is exposed at the surface, or a non-exposed type in which the core portion is not exposed at the surface.

When the composite fiber is a core sheath type, the mass ratio (core portion/sheath portion) of the sheath portion and the core portion is, for example, preferably from 95/5 to 5/95, more preferably from 90/10 to 10/90, and further preferably from 60/40 to 10/90.

The crimped fiber in the crimped surface layer is preferably composite fiber including the propylene-based polymer, more preferably crimped composite fiber including the propylene-based polymer, and still more preferably eccentric core sheath type crimped composite fiber including the propylene-based polymer.

When the crimped fiber in the crimped surface layer is the composite fiber including the propylene-based polymer, a composite fiber including two or more kinds of propylene-based polymers are preferable. When the composite fiber is the core sheath type, it is preferable that the core portion and the sheath portion each include one or more propylene-based polymers. The propylene-based polymer included in the core portion is preferably a propylene homopolymer (A) having a melting point (Tm) of 155°C or more, and preferably a propylene homopolymer (A) having a melting point (Tm) of 157°C to 165°C. The propylene-based polymer included in the sheath portion is preferably a propylene/a-olefin copolymer (B) having a melting point (Tm) of 120°C to 155°C, and preferably a propylene/a-olefin copolymer (B) having a melting point (Tm) of 125°C to 150°C.

The propylene-based polymer such as the propylene homopolymer (A), the propylene/$\alpha$-olefin copolymer (B) and the like can be obtained by homopolymerization of propylene, or copolymerization of propylene and a small amount of any $\alpha$-olefin, according to slurry polymerization, gas-phase polymerization, or bulk polymerization by use of a so-called Ziegler-Natta catalyst as a combination of a titanium-containing solid transition metal component and an organometallic component, or a metallocene catalyst including a compound of any transition metal belonging to the Groups 4 to 6 in the periodic table, the compound having at least one cyclopentadiene backbone, and a co-catalyst component.

A commercially available product may be used as the propylene homopolymer (A). For example, a propylene-based polymer manufactured by Prime Polymer Co., Ltd. under the trade name Prime Polypro S119 may be used.

A commercially available product may be used as the propylene/a-olefin copolymer (B). For example, a propylene-based polymer manufactured by Prime Polymer Co., Ltd. under the trade name Prime Polypro S229R may be used.

The basis weight of the crimped surface layer is not particularly limited, and for example, is preferably from 2 g/m$^2$ to 10 g/m$^2$, and more preferably from 3 g/m$^2$ to 8 g/m$^2$.

The method for measuring the basis weight in the present disclosure is as described in Example below.

(Crimped Intermediate Layer)

The nonwoven fabric layered body of the present embodiment includes a crimped intermediate layer including a crimped spunbond nonwoven fabric including a crimped fiber, and the linear mass density of the crimped fiber in the crimped intermediate layer is less than 1.4 denier.

The crimped intermediate layer may have one layer or may have two or more layers. When the crimped intermediate layer has two or more layers, in each of the two or more layers, the linear mass density of the crimped fiber only has to satisfy less than 1.4 denier.

The linear mass density of the crimped fiber in the crimped intermediate layer is preferably 1.3 denier or less, more preferably from 0.7 denier to 1.3 denier, and still more preferably from 1.0 denier to 1.3 denier, from the view point of the bulkiness and uniformity of the nonwoven fabric layered body.

The crimped fiber in the crimped intermediate layer preferably includes a thermoplastic resin. Examples of the thermoplastic resin include the thermoplastic resin that may be included in the crimped fiber in the afore-mentioned crimped surface layer.

The crimped fiber in the crimped intermediate layer may be a fiber including one kind of a thermoplastic resin, or may be a composite fiber including two or more kinds of thermoplastic resins. When the crimped fiber in the crimped intermediate layer is a composite fiber, a preferred form is the same as the afore-mentioned crimped surface layer.

The basis weight of the crimped intermediate layer is not particularly limited, and for example, is preferably from 2 g/m$^2$ to 10 g/m$^2$, and more preferably from 3 g/m$^2$ to 8 g/m$^2$.

In the nonwoven fabric layered body of the present embodiment, the linear mass density of the crimped fiber in the crimped surface layer is from 1.4 denier to 1.6 denier, and the linear mass density of the crimped fiber in the crimped intermediate layer is less than 1.4 denier. Thus, the crimping degree of the crimped intermediate layer tends to be greater than that of the crimped surface layer.

In the present disclosure, the crimping degree means the degree of crimping of fiber, and a large crimping degree means that the degree of crimping of fiber is large. Whether the crimping degree is large or small can be confirmed, for example, by observing the cross section of the nonwoven fabric layered body using a scanning electron microscope or the like and comparing the crimp shapes of the fiber on the surface and inside of the nonwoven fabric layered body.

(Non-crimped Surface Layer)

The nonwoven fabric layered body of the present embodiment includes a non-crimped surface layer including a non-crimped spunbond nonwoven fabric including a non-crimped fiber. The non-crimped surface layer may have one layer or may have two or more layers.

The linear mass density of the non-crimped fiber in the non-crimped surface layer is preferably 1.3 denier or less, and more preferably from 1.0 denier to 1.3 denier. When the linear mass density of the non-crimped fiber is 1.3 denier or less, there is a tendency that the non-crimped fiber has excellent mechanical strength and uniformity. When the linear mass density of the non-crimped fiber is 1.0 denier or more, there is a tendency that the non-crimped fiber has excellent mechanical strength.

The non-crimped fiber in the non-crimped surface layer preferably includes a thermoplastic resin. Examples of the thermoplastic resin include the thermoplastic resin that may be included in the crimped fiber in the afore-mentioned crimped surface layer.

The thermoplastic resin that may be included in the non-crimped fiber in the non-crimped surface layer is preferably the afore-mentioned olefin-based polymer, and more preferably the propylene-based polymer.

The basis weight of the non-crimped surface layer is not particularly limited, and for example, is preferably from 2 g/m$^2$ to 10 g/m$^2$, and more preferably from 3 g/m$^2$ to 8 g/m$^2$.

The crimped fiber in the crimped surface layer and the crimped intermediate layer and the non-crimped fiber in the non-crimped surface layer may include an additive used in the production of a nonwoven fabric. Examples of the additive include various known additives such as a hydrophilizing agent, an antioxidant, a weather-resistant stabilizer, a heat-resistant stabilizer, a light-resistant stabilizer, an antistatic agent, an antifogging agent, a lubricant, a dye, a pigment, a natural oil, a synthetic oil, and a wax.

The nonwoven fabric layered body of the present embodiment includes another nonwoven fabric layer between the crimped surface layer and the crimped intermediate layer, between the crimped intermediate layer and the non-crimped surface layer, outside the crimped surface layer, outside the non-crimped surface layer or the like, and preferably includes another nonwoven fabric layer between the crimped surface layer and the crimped intermediate layer, between the crimped intermediate layer and the non-crimped surface layer, or outside the crimped surface layer. Examples of the nonwoven fabric constituting another nonwoven fabric layer include various known nonwoven fabrics such as a spunbond nonwoven fabric, a meltblown nonwoven fabric, a wet nonwoven fabric, a dry nonwoven fabric, a dry pulp nonwoven fabric, a flash spun nonwoven fabric, and an open fiber nonwoven fabric. When the nonwoven fabric constituting another nonwoven fabric layer is a spunbond nonwoven fabric, this spunbond nonwoven fabric is not particularly limited as long as it is other than the crimped spunbond nonwoven fabric in the crimped surface layer, the crimped spunbond nonwoven fabric in the crimped intermediate layer, or the non-crimped spunbond nonwoven fabric in the non-crimped surface layer.

The nonwoven fabric layer constituting another nonwoven fabric layer may be a meltblown nonwoven fabric. For example, the nonwoven fabric layered body of the present embodiment includes a meltblown nonwoven fabric layer including the meltblown nonwoven fabric between the crimped surface layer and the crimped intermediate layer, between the crimped intermediate layer and the non-crimped surface layer or outside the crimped surface layer.

Another layer such as another nonwoven fabric layer mentioned above, a knitted fabric, a woven fabric, a film or the like may be stacked on the nonwoven fabric layered body of the present embodiment. When the nonwoven fabric layer and another layer are stacked, various known methods such as thermal fusion methods such as thermal embossing and ultrasonic fusion, mechanical entanglement methods such as needle punching and water jets, methods with adhesives such as hot melt adhesives or urethane adhesives, and extrusion lamination can be adopted.

In the nonwoven fabric layered body of the present embodiment, the total basis weight of the nonwoven fabric layered body is preferably from 10 g/m$^2$ to 30 g/m$^2$, and more preferably from 15 g/m$^2$ to 20 g/m$^2$, from the viewpoint of balance of mechanical strength, flexibility, bulkiness and uniformity, when the total basis weight of the nonwoven fabric layered body is 30 g/m$^2$ or less, there is a tendency that the nonwoven fabric layered body is excellent in flexibility. When the total basis weight of the nonwoven fabric layered body is 10 g/m$^2$ or more, there is a tendency that the nonwoven fabric layered body is excellent in mechanical strength, bulkiness and uniformity. Further, when trying to reduce the basis weight of the nonwoven fabric layered body, the bulkiness, uniformity, or the like tend to be impaired, while the nonwoven fabric layered body of the present embodiment can improve the bulkiness and uniformity. Thus, it is easy to achieve both the low basis weight and excellent bulkiness and uniformity in the nonwoven fabric layered body.

In nonwoven fabric layered body of the present embodiment, from the viewpoint of balance of mechanical strength, flexibility, bulkiness and uniformity, the total value of the basis weight of the crimped surface layer and the crimped intermediate layer is preferably 50 % or more, and more preferably from 60 % to 75 %, with respect to the total basis weight of the nonwoven fabric layered body. When the afore-mentioned ratio of the total value is 75 % or less, there is a tendency that the nonwoven fabric layered body is excellent in mechanical strength and uniformity. When the afore-mentioned ratio of the total value is 50 % or more, there is a tendency that the nonwoven fabric layered body is excellent in flexibility and bulkiness.

In nonwoven fabric layered body of the present embodiment, from the viewpoint of balance of flexibility, bulkiness and uniformity, the total value of the basis weight of the crimped surface layer, the crimped intermediate layer and the non-crimped surface layer is preferably from 60 % to 100 %, and more preferably from 80 % to 100 %, with respect to the total basis weight of the nonwoven fabric layered body.

In each of the layers included in the nonwoven fabric layered body of the present embodiment, a ratio (maximum basis weight/minimum basis weight) of the basis weight (maximum basis weight) in the layer with the largest basis weight and the basis weight (minimum basis weight) in the layer with the smallest basis weight is preferably from 1.0 to 1.3, and more preferably from 1.1 to 1.3.

In the nonwoven fabric layered body of the present embodiment, the ratio (basis weight of crimped surface layer/basis weight of crimped intermediate layer) of the basis weight of the crimped surface layer and the basis weight of the crimped intermediate layer is preferably from 0.5 to 1.5, and more preferably from 0.7 to 1.3, from the viewpoint of a balance of flexibility, bulkiness and uniformity.

A method of manufacturing the nonwoven fabric layered body of the present disclosure is not particularly limited.

For example, the nonwoven fabric layered body of the present disclosure can be manufactured by the following manufacturing method 1 and manufacturing method 2.

(Manufacturing Method 1 of Nonwoven Fabric Layered Body)

The manufacturing method 1 includes a step of producing the crimped surface layer including the crimped spunbond nonwoven fabric by melt-spinning a thermoplastic resin by a spunbond method and depositing crimped fiber obtained by melt-spinning on a moving collecting surface,

a step of producing the crimped intermediate layer including the crimped spunbond nonwoven fabric by melt-spinning a thermoplastic resin by a spunbond method and depositing crimped fiber obtained by melt-spinning on the crimped surface layer on the moving collecting surface, and
a step of producing the non-crimped surface layer including the non-crimped spunbond nonwoven fabric by melt-spinning a thermoplastic resin by a spunbond method and depositing non-crimped fiber obtained by melt-spinning on the crimped intermediate layer.

In the step of producing the crimped surface layer and the step of producing the crimped intermediate layer, the crimped fiber may be obtained by melting thermoplastic resins individually using at least two extruders and discharging two or more thermoplastic resins from a composite spinning nozzle to perform composite melt spinning.

In the step of producing the crimping surface layer and the step of producing the crimped intermediate layer, the linear mass density of the crimped fiber in the crimped surface layer and the linear mass density of the crimped fiber in the crimped intermediate layer can be adjusted by appropriately adjusting the amount of air, the diameter of the spinning nozzle, and the amount of discharge from the spinning nozzle during melt spinning by the spunbond method.

(Manufacturing Method 2 of Nonwoven Fabric Layered Body)

The manufacturing method 2 includes a step of producing the non-crimped surface layer including the non-crimped spunbond nonwoven fabric by melt-spinning a thermoplastic resin by a spunbond method and depositing non-crimped fiber obtained by melt-spinning on a moving collecting surface,

a step of producing the crimped intermediate layer including the crimped spunbond nonwoven fabric by melt-spinning a thermoplastic resin by a spunbond method and depositing crimped fiber obtained by melt-spinning on the non-crimped surface layer on the moving collecting surface, and
a step of producing the crimped surface layer including the crimped spunbond nonwoven fabric by melt-spinning a thermoplastic resin by a spunbond method and depositing crimped fiber obtained by melt-spinning on the crimped intermediate layer.

The manufacturing method 2 of the nonwoven fabric layered body is the same as the manufacturing method 1 of the nonwoven fabric layered body except that the order of producing the non-crimped surface layer and the crimped surface layer is changed.

<Second Embodiment>

A nonwoven fabric layered body according to a second embodiment of the present disclosure includes, a crimped layer including a crimped spunbond nonwoven fabric including a crimped fiber, and a non-crimped surface layer including a non-crimped spunbond nonwoven fabric including a non-crimped fiber, in which the nonwoven fabric layered body satisfies the following (1) to (3):

(1) a difference (TO - TM) between a thickness TO at pressure of 0.5 gf/cm$^2$ in a compression characteristics test measured by a KES method and a thickness TM at pressure of 50 gf/cm$^2$ measured by the KES method is more than 0.30 mm;

(2) a value of a cantilever in an MD direction in accordance with a cantilever method (ISO method) of JIS L 1913: 2010 is less than 40 mm; and

(3) a formation index (V) represented by the following Formula (a) is less than 310:

$$\text{Formula (a): } V = 10\sigma/E$$

in which, in Formula (a), V represents the formation index, $\sigma$ represents a standard deviation of a shading unevenness of the nonwoven fabric layered body, E represents 2-logT, and T represents a light transmittance (%) of the nonwoven fabric layered body.

The nonwoven fabric layered body of the present embodiment is excellent in bulkiness, flexibility and uniformity, and by providing the non-crimped surface layer including the non-crimped spunbond nonwoven fabric including the non-crimped fiber, it is also excellent in fuzz resistance.

The difference (TO - TM) between the thickness TO at pressure of 0.5 gf/cm$^2$ in a compression characteristics test measured by a KES method and the thickness TM at pressure of 50 gf/cm$^2$ measured by the KES method is more than 0.30 mm, and preferably 0.31 mm or more. The larger the TO - TM value, the better the bulkiness of the nonwoven fabric layered body.

The upper limit of TO - TM is not particularly limited and may be 0.40 mm or less.

The KES (Kawabata Evaluation System) method is one of methods for measuring and objectively evaluating the texture of a nonwoven fabric. The Specific method for measuring TO and TM are as described in Examples below.

In the nonwoven fabric layered body of the present embodiment, the value of the cantilever in the MD direction in accordance with the cantilever method (ISO method) of JIS L 1913: 2010 is less than 40 mm, and preferably 38 mm or less. The smaller the value of the cantilever in the MD direction, the better the flexibility of the nonwoven fabric layered body. The value of the cantilever in the MD direction is as described in Examples below.

The lower limit of the value of the cantilever in the MD direction is not particularly limited and may be 30 mm or more.

In the nonwoven fabric layered body of the present embodiment, the formation index (V) represented by the Formula (a) is less than 310, and more preferably 305 or less. The smaller the value of the formation index (V), the better the formation and uniformity of the nonwoven fabric layered body. The value of the formation index (V) is as described in Examples below.

The lower limit of the value of the formation index (V) is not particularly limited and may be 280 or more.

In the nonwoven fabric layered body of the present embodiment, the crimped layer including the crimped spunbond nonwoven fabric including the crimped fiber may have one layer or may have two or more layers. The non-crimped surface layer including the non-crimped spunbond nonwoven fabric including the non-crimped fiber may have one layer or may have two or more layers. A preferable aspect of the crimped layer of the present embodiment is the same as the crimped surface layer or the crimped intermediate layer of the first embodiment, a preferable aspect of the non-crimped surface layer of the present embodiment is the same as the non-crimped surface layer of the first embodiment, and thus the detailed description thereof will be omitted.

In the nonwoven fabric layered body of the present embodiment, for example, when producing the crimped layer or the non-crimped surface layer, the nonwoven fabric layered body satisfying the afore-mentioned (1) to (3) can be obtained by appropriately adjusting the amount of air, the diameter of a spinning nozzle, and the amount of discharge from a spinning nozzle during melt spinning by the spunbond method. When producing the crimped layer or the non-crimped surface layer, it is also possible to change the discharge amount of the resin for each hole by using plural spinning nozzles with at least one of different spinning nozzle hole diameters and nozzle hole densities, using a spinning nozzle with plural types of holes with different diameters, or using a spinning nozzle capable of simultaneously discharging resins extruded from plural extruders through separate holes.

The preferable aspect of the crimped surface layer, the crimped intermediate layer and the non-crimped surface layer of the present embodiment is the same as the preferable aspect of the crimped surface layer, the crimped intermediate layer and the non-crimped surface layer of the first embodiment, and thus the detailed description thereof will be omitted.

In the nonwoven fabric layered body of the present embodiment, for example, when producing the crimped surface layer or the crimped intermediate layer, the nonwoven fabric layered body having the relationship of the afore-mentioned crimping degree can be obtained by appropriately adjusting the amount of air, the diameter of the spinning nozzle, and the amount of discharge from the spinning nozzle during melt spinning by the spunbond method.

<Cover Sheet>

A cover sheet in the present disclosure includes the nonwoven fabric layered body in the present disclosure. The cover sheet in the present disclosure is not particularly limited as long as the cover sheet includes the nonwoven fabric layered body in the present disclosure. The cover sheet in the present disclosure refers to a sheet for covering at least a part of a target object. The cover sheet is not particularly limited, and has various uses. Specifically, Examples of uses to which the cover sheet is applied include absorbent articles (disposable diapers, disposable pants, sanitary napkins, urine absorbing pads, top sheets such as pet sheets, second sheets, and packaging material (core wrap) for absorbers (pulp/polymer absorbent particles)); cosmetic materials (face masks, and the like); sanitary materials (wet cloth materials, sheets, towels, industrial masks, sanitary masks, hair caps, gauze, disposable underwear, and the like); and packaging materials (deoxidizers, hot packs, warm poultices, food packaging materials). Furthermore, it can be applied to general living materials such as clothes covers. It can also be suitably used as automobile interior materials and various backing materials. It can be widely applied as filter materials such as liquid filters and air filters.

The absorbent articles, the cosmetic materials, the sanitary materials, the packaging materials, the clothes covers, the automobile interior materials, the backing materials, the filter materials, and the like are not particularly limited as long as each of them independently includes the afore-mentioned nonwoven fabric layered body of the present disclosure or the afore-mentioned cover sheet of the present disclosure.

Examples

Hereinafter, the present invention will be specifically described with reference to examples, but the present invention is not limited to the following examples as long as the gist of the present invention is not exceeded.

Thermoplastic resins that were used in producing crimped spunbond nonwoven fabrics including crimped fibers in Examples and Comparative Examples are shown below.

<Thermoplastic resins that were used in producing crimped spunbond nonwoven fabrics>

-Core Component-

Propylene homopolymer (hPP) with MFR (ASTM D1238, 230°C, and load: 2,160 g): 60 g/10min, and melting point of 162°C

-Sheath Component-

Propylene/ethylene random copolymer (rPP) with MFR (ASTM D1238, 230°C, and load: 2,160 g): 60 g/10min, melting point of 142°C, and ethylene content of 4 % by mass

A thermoplastic resin that was used in producing non-crimped spunbond nonwoven fabrics including non-crimped fibers in Examples and Comparative Examples is shown below.

<Thermoplastic resin that was used in producing non-crimped spunbond nonwoven fabrics>

Polymer mixture obtained by mixing propylene homopolymer (hPP) with MFR (ASTM D-1238, 230°C, and load: 2,160g): 60g/10 minutes, melting point of 162°C, and density of 0.92g/cm$^3$, and propylene/ethylene random copolymer (rPP) with MFR (ASTM D-1238, 230°C , load: 2,160 g): 60 g/10 minutes, melting point of 142°C, ethylene content of 4 % by mass, and density of 0.92 g/cm$^3$, at a mass ratio of 30:70

[Example 1]

(Production of Nonwoven Fabric Layered Body)

<Production of Non-crimped Surface layer>

Melt spinning was performed by the spunbond method using the afore-mentioned polymer mixture. Non-crimped fibers obtained by the melt spinning were deposited on a moving collecting surface to produce a non-crimped surface layer consisting of a non-crimped spunbond nonwoven fabric.

<Production of Crimped Intermediate Layer>

The afore-mentioned propylene homopolymer (hPP) as the core component and the afore-mentioned propylene/ethylene random copolymer (rPP) as the sheath component were used to perform composite melt spinning by the spunbond method. The mass ratio of core component/sheath component was set to 30/70. Eccentric core sheath type crimped fibers obtained by the composite melt spinning were deposited on the non-crimped surface layer deposited on the moving collecting surface to produce a crimped intermediate layer consisting of a crimped spunbond nonwoven fabric.

<Production of Crimped Surface Layer>

The afore-mentioned propylene homopolymer (hPP) as the core component and the afore-mentioned propylene/ethylene random copolymer (rPP) as the sheath component were used to perform composite melt spinning by the spunbond method. The mass ratio of core component/sheath component was set to 30/70. Eccentric core sheath type crimped fibers obtained by the composite melt spinning were deposited on the crimped intermediate layer deposited on the moving collecting surface to produce a crimped surface layer consisting of a crimped spunbond nonwoven fabric.

The above three layers were passed through a heat embossing roll with an area ratio of 10 % to melt and entangle the fibers. Thus a nonwoven fabric layered body in which the non-crimped surface layer, the crimped intermediate layer and the crimped surface layer were stacked in this order was produced.

The basis weight of the produced non-crimped surface layer, the basis weight of the produced crimped intermediate layer, and the basis weight of the crimped surface layer and the mass density of the crimped fiber in the crimped intermediate layer and the mass density of the crimped fiber in the crimped surface layer are as shown in Table 1.

[Example 2]

In Example 1, a nonwoven fabric layered body in which the non-crimped surface layer, the crimped intermediate layer and the crimped surface layer were stacked in this order was obtained in the same manner as in Example 1, except that the linear mass density of the crimped fiber in the crimped surface layer and the linear mass density of the crimped fiber in the crimped intermediate layer were set to the values shown in Table 1 by changing the amount of air and the amount of discharge from the spinning nozzle when spinning the fibers of each layer.

[Comparative Examples 1 to 4]

In Example 1, a nonwoven fabric layered body in which the non-crimped surface layer, the crimped intermediate layer and the crimped surface layer were stacked in this order was obtained in the same manner as in Example 1, except that the linear mass density of the crimped fiber in the crimped surface layer and the basis weight of the crimped surface layer, and the linear mass density of the crimped fiber in the crimped intermediate layer and the basis weight of the crimped intermediate layer were set to the values shown in Table 1 by changing the amount of air and the amount of discharge from the spinning nozzle when spinning the fibers of each layer.

[Comparative Example 5]

<Production of Crimped Surface Layer>

The afore-mentioned propylene homopolymer (hPP) as the core component and the afore-mentioned propylene/ethylene random copolymer (rPP) as the sheath component were used to perform composite melt spinning by the spunbond method. The mass ratio of core component/sheath component was set to 30/70. Eccentric core sheath type crimped fibers obtained by the composite melt spinning were deposited on a moving collecting surface to produce a crimped surface layer consisting of a crimped spunbond nonwoven fabric.

<Production of Non-crimped Intermediate Layer>

Melt spinning was performed by the spunbond method using the afore-mentioned polymer mixture. Non-crimped fibers obtained by the melt spinning were deposited on the crimped surface layer deposited on the moving collecting surface to produce a non-crimped intermediate layer consisting of a non-crimped spunbond nonwoven fabric.

<Production of Crimped Surface Layer>

The afore-mentioned propylene homopolymer (hPP) as the core component and the afore-mentioned propylene/ethylene random copolymer (rPP) as the sheath component were used to perform composite melt spinning by the spunbond method. The mass ratio of core component/sheath component was set to 30/70. Eccentric core sheath type crimped fibers obtained by the composite melt spinning were deposited on the non-crimped intermediate layer to produce a crimped surface layer consisting of a crimped spunbond nonwoven fabric.

The above three layers were passed through a heat embossing roll with an area ratio of 10 % to melt and entangle the fibers. Thus a nonwoven fabric layered body in which the crimped surface layer, the non-crimped intermediate layer and the crimped surface layer were stacked in this order was produced.

[Comparative Example 6]

<Production of Crimped Surface Layer>

The afore-mentioned propylene homopolymer (hPP) as the core component and the afore-mentioned propylene/ethylene random copolymer (rPP) as the sheath component were used to perform composite melt spinning by the spunbond method. The mass ratio of core component/sheath component was set to 30/70. Eccentric core sheath type crimped fibers obtained by the composite melt spinning were deposited on a moving collecting surface to produce a crimped surface layer consisting of a crimped spunbond nonwoven fabric.

<Production of Crimped Intermediate Layer>

The afore-mentioned propylene homopolymer (hPP) as the core component and the afore-mentioned propylene/ethylene random copolymer (rPP) as the sheath component were used to perform composite melt spinning by the spunbond method. The mass ratio of core component/sheath component was set to 30/70. Eccentric core sheath type crimped fibers obtained by the composite melt spinning were deposited on the crimped surface layer deposited on the moving collecting surface to produce a crimped intermediate layer consisting of a crimped spunbond nonwoven fabric.

<Production of Crimped Surface Layer>

The afore-mentioned propylene homopolymer (hPP) as the core component and the afore-mentioned propylene/ethylene random copolymer (rPP) as the sheath component were used to perform composite melt spinning by the spunbond method. The mass ratio of core component/sheath component was set to 30/70. Eccentric core sheath type crimped fibers obtained by the composite melt spinning were deposited on the crimped intermediate layer to produce a crimped surface layer consisting of a crimped spunbond nonwoven fabric.

The above three layers were passed through a heat embossing roll with an area ratio of 10 % to melt and entangle the fibers. Thus a nonwoven fabric layered body in which the crimped surface layer, the crimped intermediate layer and the crimped surface layer were stacked in this order was produced.

[Comparative Example 7]

A non-crimped intermediate layer produced in the same manner as in Comparative Example 5 was produced on the non-crimped surface layer produced in the same manner as in Comparative Example 1, and then the crimped surface layer was produced on the non-crimped intermediate layer in the same manner as in Comparative Example 6.

From the above, a nonwoven fabric layered body in which the non-crimped surface layer, the non-crimped intermediate layer and the crimped surface layer were stacked in this order was produced.

[Comparative Example 8]

In Comparative Example 7, a nonwoven fabric layered body in which a non-crimped surface layer, a non-crimped intermediate layer and a non-crimped surface layer were stacked in this order was produced in the same manner as in Comparative Example 7 except that the crimped surface layer was changed to the non-crimped surface layer produced in Comparative Example 7.

(1) Basis Weight [g/m$^2$]

Ten test pieces of 100 mm (machine direction: MD) $\times$ 100 mm (direction orthogonal to machine direction: CD) were collected from the nonwoven fabric corresponding to each layer. Places at which the test pieces were collected were set at ten places in the CD direction. Then, the mass [g] of each collected test piece was measured using an electronic balance scale (manufactured by Kensei Co., LTD.). The average value of the masses of the test pieces was determined. The determined average value was converted into a mass [g] per 1 m$^2$, the converted value was rounded off to one decimal place to obtain the value, which was regarded as the basis weight [g/m$^2$] of each nonwoven fabric.

The total value of the basis weight of each layer was regarded as the total basis weight.

(2) Linear Mass Density

The linear mass density refers to the thickness of fiber that is 1 g per 9000 m, and when the mass per 9000 m of fiber is 1 g, the linear mass density of this fiber is 1 denier. The linear mass density of the fiber included in each layer was calculated as follows.

The cross section of the nonwoven fabric layered body was observed with a scanning electron microscope, and 20 fibers included in each layer were observed for the crimped surface layer, the crimped intermediate layer, the non-crimped intermediate layer, and the non-crimped surface layer. The average diameter [$\mu$m] was obtained with three significant figures. Using the average value of this fiber outer diameter and the resin density, the linear mass density [denier] of the fiber included in each layer, that is, [g/9000 m] was calculated to two significant figures.

(3) Basis Weight Ratio Between Layers

Among the layers constituting the nonwoven fabric layered body, the ratio of the basis weight of the layer with the largest basis weight with respect to the basis weight of the layer with the smallest basis weight was defined as the basis weight ratio between layers. In addition, when the value of the basis weight of each layer is equal, the basis weight ratio between layers is 1.00.

(4) Productivity

The productivity was evaluated from stability in each steps of transfer from the moving collecting surface to the heat embossing roll when producing the nonwoven fabric layered body, and winding of the nonwoven fabric layered body. Evaluation criteria are as follows.

-Evaluation Criteria-

Evaluation A: Width fluctuation and breakage of the nonwoven fabric layered body do not occur, and stable production is possible.
Evaluation B: At least one of width fluctuation and breakage of the nonwoven fabric layered body occurs, and stable production is not possible.

(4) TO (Thickness TO at pressure of 0.5 gf/cm$^2$) - TM (Thickness TO at pressure of 50 gf/cm$^2$) [mm] [Evaluation of Bulkiness]

Two test pieces of 150 mm (MD) $\times$ 150 mm (CD) were collected from the obtained nonwoven fabric layered body. Places at which the test pieces were collected were set at two places in the CD direction. Then, the compression test was performed to the test pieces with a testing machine KES-FB3-A manufactured by Kato Tech Co., Ltd under the condition of RH environment of 20°C and 50% relative humidity, using compressors (steel pressure plates having a circular plane with a compression area of 2 cm$^2$) and at a compression deformation rate of 0.020 mm/sec and a maximum pressure of 50 gf/cm$^2$, to measure TO [mm] and TM [mm].

The average values of TO [mm] and TM [mm] of test samples were determined, and rounded off to two decimal place to obtain values which were regarded as TO [mm] and TM [mm] of each nonwoven fabric sample. TO - TM [mm] of each nonwoven fabric sample was calculated.

Evaluation criteria of bulkiness are as follows.

Evaluation A: TO - TM is larger than 0.30 mm.
Evaluation B: TO - TM is 0.3 mm or less.

(6) Cantilever (Evaluation of Flexibility)

In the obtained nonwoven fabric layer body, the cantilever in the MD direction was determined in accordance with the cantilever method (ISO method) of JIS L 1913: 2010.

Evaluation criteria of flexibility are as follows.

Evaluation A: The value of the cantilever is less than 40 mm.
Evaluation B: The value of the cantilever is 40 mm or more.

(7) Formation Index (Evaluation of Uniformity)

The obtained nonwoven fabric layered body was measured using a formation tester FMT-MIII manufactured by NOMURA SHOJI CO., LTD., and the average value of n=5 formation indixes was regarded as the formation index. The smaller the formation index, the better the formation and the better the uniformity.

The formation index (V) is represented by $V=10\sigma/E$. $\sigma$ represents the standard deviation of shading unevenness of the nonwoven fabric layered body, and E represents 2-logT. T represents the light transmittance (%) of the nonwoven fabric layered body. When the light transmittance is close to 100% (poor formation), $E\approx0$ and V shows an infinitely large value. Conversely, the closer the light transmittance is to 0% and the better the formation, the larger the value of E and the smaller the value of V.

Evaluation criteria of uniformity are as follows.

Evaluation A: The value of the formation index is less than 310.
Evaluation B: The value of the formation index is 310 or more.

(8) Fuzz Resistance on Used Surface

The fuzz resistance on the used surface shown in Table 1 was evaluated as follows.

Two test pieces of 150 mm (MD) $\times$ 150 mm (CD) were collected from the obtained nonwoven fabric layered body. Places at which the test pieces were collected were arbitrarily set at two places. Next, using a Gakushin-Type Fastness Rubbing Tester (manufactured by DAIEI KAGAKU SEIKI MFG. Co., Ltd., new model NR-100), each collected test piece was subjected to a rubbing test in accordance with testing method for fastness to rubbing of JIS L 0849. A cloth tape (No. 1532, manufactured by Teraoka Seisakusho Co., Ltd.) is attached to the friction element side, and the surface to be used was rubbed back and forth in the MD direction 50 times, and the fuzziness of the rubbed surface of each test piece was evaluated according to the following criteria.

-Evaluation Criteria-

Evaluation A: There is no fuzz, or it is fluffed to the extent that a small pill (diameter: 0.1 mm or more and less than 0.8 mm) begins to form in one place.
Evaluation B: Distinguished pills (diameter: 0.8 mm or more) begin to form, or plural small pills (diameter: less than 0.8 mm) are observed.

Table 1 shows the layer structure, evaluation results, and the like for each Example and each Comparative Example. "-" in Table 1 means that the corresponding layer does not exist in the nonwoven fabric layered body.

[Table 1]

| | | Example 1 | Example 2 | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|---|
| Number of crimped surface layer | | 1 | 1 | 1 | 1 | 1 | 1 | 2 | 2 | 1 | 0 |
| Number of crimped intermediate layer | | 1 | 1 | 1 | 1 | 1 | 1 | 0 | 1 | 0 | 0 |
| Number of non-crimped surface layer | | 1 | 1 | 1 | 1 | 1 | 1 | 0 | 0 | 1 | 2 |
| Number of non-crimped intermediate layer | | 0 | 0 | 0 | 0 | 0 | 0 | 1 | 0 | 1 | 1 |
| Total basis weight[ g/m²] | | 20 | 20 | 20 | 20 | 20 | 20 | 20 | 20 | 20 | 20 |
| Crimped surface layer | Linear mass density[d] | 1.4 | 1.5 | 1.3 | 1.3 | 1.5 | 1.7 | 1.5 | 1.6 | 1.6 | - |
| | Basis weight [ g/m²] | 7.4 | 7.4 | 5.9 | 6.7 | 6.7 | 6.7 | 6.7 | 6.7 | 6.7 | - |
| Crimped intermediate layer | Linear mass density[d] | 1.2 | 1.3 | 1.5 | 1.3 | 1.5 | 1.7 | - | 1.6 | - | - |
| | Basis weight [ g/m²] | 5.9 | 5.9 | 7.4 | 6.7 | 6.7 | 6.7 | - | 6.7 | - | - |
| Non-crimped surface layer | Linear mass density[d] | 1.2 | 1.2 | 1.2 | 1.2 | 1.2 | 1.2 | - | - | 1.2 | 1.2 |
| | Basis weight [ g/m²] | 6.7 | 6.7 | 6.7 | 6.7 | 6.7 | 6.7 | - | - | 6.7 | 6.7 |

EP 4 112 796 A1

(continued)

| | | Example 1 | Example 2 | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|---|
| Non-crimped intermediate layer | Linear mass density[d] | - | - | - | - | - | - | 1.2 | - | 1.2 | 1.2 |
| | Basis weight [ g/m$^2$] | - | - | - | - | - | - | 6.7 | - | 6.7 | 6.7 |
| Basis weight ratio between layers | | 1.25 | 1.25 | 1.25 | 1 | 1 | 1 | 1 | 1 | 1 | 1 |
| Productivity | | A | A | A | A | A | A | A | B | A | A |
| Bulkiness | TO-TM | 0.31 | 0.35 | 0.29 | 0.29 | 0.37 | 0.29 | 0.37 | 0.38 | 0.28 | 0.25 |
| | [mm] | A | A | B | B | A | B | A | A | B | B |
| Flexibility | Cantilever | 35 | 36 | 38 | 33 | 38 | 37 | 38 | 35 | 40 | 37 |
| | [mm] | A | A | A | A | A | A | A | A | B | A |
| Uniformity | Formation index | 293 | 302 | 303 | 295 | 363 | 380 | 363 | 400 | 310 | 280 |
| | [-] | A | A | A | A | B | B | B | B | B | A |
| Fuzz resitance on used surface | Evaluation | A | A | A | A | A | A | B | B | A | A |
| | Used surface | Non-crimped surface layer | Non-crimped surface layer | Non-crimped surface layer | Non-crimped surface layer | Non-crimped surface layer | Non-crimped surface layer | Crimped surface layer | Crimped surface layer | Non-crimped surface layer | Non-crimped surface layer |

EP 4 112 796 A1

16

As shown in Table 1, in Examples 1 and 2, the productivity of the nonwoven fabric layered body was excellent, and the obtained nonwoven fabric layered body was excellent in bulkiness, flexibility, uniformity, and fuzz resistance on the used surface.

On the other hand, in Comparative Examples 1 to 5, 7 and 8, although the productivity of the nonwoven fabric layered body was excellent, the obtained nonwoven fabric layered body was insufficient in at least one of bulkiness, flexibility, uniformity and fuzz resistance on the used surface.

In addition, in Comparative Example 6, the productivity of the nonwoven fabric layered body was not good, and the obtained nonwoven fabric layered body had insufficient uniformity and fuzz resistance on the used surface.

The disclosure of Japanese Patent Application 2020-065275, filed on March 31, 2020 is incorporated herein by reference in their entirety.

All publications, patent applications, and technical standards mentioned in the present specification are incorporated herein by reference to the same extent as if each individual publication, patent application, or technical standard was specifically and individually indicated to be incorporated by reference.

**Claims**

1. A nonwoven fabric layered body comprising, in the following order:

   a crimped surface layer including a crimped spunbond nonwoven fabric including a crimped fiber,
   a crimped intermediate layer including a crimped spunbond nonwoven fabric including a crimped fiber, and
   a non-crimped surface layer including a non-crimped spunbond nonwoven fabric including a non-crimped fiber,
   wherein a linear mass density of the crimped fiber in the crimped surface layer is from 1.4 denier to 1.6 denier, and
   a linear mass density of the crimped fiber in the crimped intermediate layer is less than 1.4 denier.

2. The nonwoven fabric layered body according to claim 1, wherein the linear mass density of the crimped fiber in the crimped surface layer is from 1.5 denier to 1.6 denier.

3. The nonwoven fabric layered body according to claim 1 or claim 2, wherein the linear mass density of the crimped fiber in the crimped intermediate layer is from 0.7 denier to 1.3 denier.

4. The nonwoven fabric layered body according to any one of claims 1 to 3, wherein a linear mass density of the non-crimped fiber in the non-crimped surface layer is 1.3 denier or less.

5. The nonwoven fabric layered body according to any one of claims 1 to 4, wherein each of the crimped fiber in the crimped surface layer and the crimped fiber in the crimped intermediate layer includes a propylene-based polymer.

6. The nonwoven fabric layered body according to any one of claims 1 to 5, wherein each melt flow rate (MFR) (ASTM D-1238, 230°C, and load: 2,160 g) of a thermoplastic resin included in the crimped fiber in the crimped surface layer and a thermoplastic resin included in the crimped fiber in the crimped intermediate layer is independently 100 g/10 min or less.

7. The nonwoven fabric layered body according to any one of claims 1 to 6, wherein a total basis weight of the nonwoven fabric layered body is from 15 g/m$^2$ to 20 g/m$^2$.

8. The nonwoven fabric layered body according to any one of claims 1 to 7, wherein a total value of a basis weight of the crimped surface layer and the crimped intermediate layer is 50 % or more with respect to a total basis weight of the nonwoven fabric layered body.

9. The nonwoven fabric layered body according to any one of claims 1 to 8, wherein in each layer of the nonwoven fabric layered body, a ratio (maximum basis weight/minimum basis weight) of a basis weight (maximum basis weight) in a layer with a maximum basis weight and a basis weight (minimum basis weight) in a layer with a minimum basis weight is from 1.0 to 1.3.

10. A nonwoven fabric layered body comprising:

    a crimped layer including a crimped spunbond nonwoven fabric including a crimped fiber, and

a non-crimped surface layer including a non-crimped spunbond nonwoven fabric including a non-crimped fiber, wherein the nonwoven fabric layered body satisfies the following (1) to (3):

(1) a difference (TO - TM) between a thickness TO at pressure of 0.5 gf/cm$^2$ in a compression characteristics test measured by a KES method and a thickness TM at pressure of 50 gf/cm$^2$ measured by the KES method is more than 0.30 mm;
(2) a value of a cantilever in an MD direction in accordance with a cantilever method (ISO method) of JIS L 1913: 2010 is less than 40 mm; and
(3) a formation index (V) represented by the following Formula (a) is less than 310:

$$\text{Formula (a): } V = 10\sigma/E$$

wherein, in Formula (a), V represents the formation index, σ represents a standard deviation of a shading unevenness of the nonwoven fabric layered body, E represents 2-logT, and T represents a light transmittance (%) of the nonwoven fabric layered body.

11. A cover sheet comprising the nonwoven fabric layered body according to any one of claims 1 to 10.

12. An absorbent article comprising the nonwoven fabric layered body according to any one of claims 1 to 10 and the cover sheet according to claim 11.

**INTERNATIONAL SEARCH REPORT**

| International application No. |
| --- |
| PCT/JP2021/012946 |

A. CLASSIFICATION OF SUBJECT MATTER
Int.Cl. D04H3/16(2006.01)i, B32B5/02(2006.01)i, B32B5/26(2006.01)i
FI: D04H3/16, B32B5/02C, B32B5/26
According to International Patent Classification (IPC) or to both national classification and IPC

B. FIELDS SEARCHED

Minimum documentation searched (classification system followed by classification symbols)
Int.Cl. D04H1/00-18/04, B32B1/00-43/00

Documentation searched other than minimum documentation to the extent that such documents are included in the fields searched
Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | WO 02/061192 A1 (MITSUI CHEMICALS, INC.) 08 August 2002 (2002-08-08), claims 1, 5, 9, 10, 13, abstract | 1-12 |
| A | WO 2019/146726 A1 (ASAHI KASEI CORPORATION) 01 August 2019 (2019-08-01), claims 1, 14, paragraph [0001] | 1-12 |
| A | JP 2018-145544 A (ASAHI KASEI CORPORATION) 20 September 2018 (2018-09-20), claims 1, 2, 4, 5, 11, 13, paragraph [0068] | 1-12 |
| A | JP 2019-131946 A (FIBERTEX PERSONAL CARE AS) 08 August 2019 (2019-08-08), claims 1, 13, 15, paragraph [0001] | 1-12 |
| A | JP 2016-141929 A (REIFENHAEUSER GMBH AND CO KG MASCHINENFABRIK) 08 August 2016 (2016-08-08), claims 1, 6, abstract | 1-12 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 24 May 2021 | 01 June 2021 |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

**INTERNATIONAL SEARCH REPORT**
Information on patent family members

| International application No. |
| --- |
| PCT/JP2021/012946 |

| | | |
| --- | --- | --- |
| WO 02/061192 A1 | 08 August 2002 | US 2004/0067709 A1<br>claims 1, 5, 9, 10, 13,<br>abstract<br>EP 1369518 A1<br>BR 207071 A<br>KR 10-0701553 B1<br>MX PA03006656 A<br>TW 238208 B<br>CN 1489655 A<br>AU 2002226738 B<br>DK 1369518 T |
| WO 2019/146726 A1 | 01 August 2019 | (Family: none) |
| JP 2018-145544 A | 20 September 2018 | (Family: none) |
| JP 2019-131946 A | 08 August 2019 | US 2019/0233993 A1<br>claims 1, 13, 15, paragraph [0001]<br>EP 3521495 A1<br>IL 264427 D<br>CN 110106636 A<br>KR 10-2019-0093164 A<br>BR 102019001677 A<br>ZA 201900632 B<br>MX 2019001343 A<br>IL 264427 D0 |
| JP 2016-141929 A | 08 August 2016 | US 2016/0221300 A1<br>claims 1, 6, paragraph [0005]<br>EP 3054042 A1<br>CN 105839298 A<br>KR 10-2016-0096043 A<br>MX 2016001075 A<br>AR 103533 A<br>DK 3054042 T<br>ES 2676305 T<br>PL 3054042 T<br>KR 10-2019-0054043 A<br>BR 102016002272 A |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019131945 A
- JP 2019131946 A

- JP 2020065275 A